# EUROPÄISCHE PATENTSCHRIFT

(11) **EP 2 707 123 B1**
(45) Veröffentlichungstag und Bekanntmachung des Hinweises auf die Patenterteilung: **26.05.2021**
(21) Anmeldenummer: 12712646.4
(22) Anmeldetag: 30.03.2012
(51) Int. Cl.: B01D 53/86, B01D 53/94, B01J 23/888

(54) **ROHSTOFFE FÜR VANADIUMFREIE ODER VANADIUMREDUZIERTE DENOX-KATALYSATOREN UND VERFAHREN ZU IHRER HERSTELLUNG**
RAW MATERIALS FOR VANADIUM-FREE OR VANADIUM-REDUCED DENOX CATALYSTS, AND METHOD FOR PRODUCING SAME
MATIÈRES PREMIÈRES POUR CATALYSEURS DENOX EXEMPTS DE VANADIUM OU À TENEUR RÉDUITE EN VANADIUM ET PROCÉDÉ POUR LA PRÉPARATION DESDITES MATIÈRES PREMIÈRES

(30) Priorität: 11.05.2011 EP 11165659
(43) Veröffentlichungstag der Anmeldung: 19.03.2014
(73) Patentinhaber: Venator Uerdingen GmbH, 47829 Krefeld (DE)
(72) Erfinder: BECKER, Ralf, 46244 Bottrop (DE); AUER, Gerhard, 47800 Krefeld (DE); HIPLER, Frank, 47800 Krefeld (DE); GALBARCZYK, Nicole, 47839 Krefeld (DE); LANGE, Kai-Sven, 45136 Essen (DE); GÜNNEL, Horst, 47906 Kempen (DE); DÖRSCHUG, Uwe, 47918 Tönisvorst (DE)
(74) Vertreter: Nobbe, Matthias
(86) Internationale Anmeldenummer: PCT/EP2012/055810
(87) Internationale Veröffentlichungsnummer: WO 2012/152506

(56) Entgegenhaltungen:
- EP-A1- 0 410 440
- EP-A1- 0 956 899
- EP-A1- 2 123 808
- EP-A2- 0 317 875
- EP-A2- 2 255 874
- WO-A1-2009/153970
- GB-A- 2 450 484
- US-A- 3 990 999
- US-A- 4 085 193
- US-A1- 2005 137 082
- US-A1- 2010 209 324

## Beschreibung

### Technisches Gebiet

Die Erfindung betrifft eine als Rohstoff für die Herstellung vanadiumfreier oder vanadiumreduzierter DeNOx-Katalysatoren geeignete Zusammensetzung, umfassend eine Titanverbindung, die in der TiO₂-Herstellung nach dem Sulfatverfahren bei der Hydrolyse einer titanylsulfathaltigen Lösung erhalten wird und/oder eine mikrokristalline Anatasstruktur aufweist, eine Eisenverbindung und eine Wolframverbindung, sowie ein Verfahren zur Herstellung der Zusammensetzung und formstabile, katalytisch aktive Festkörper, die aus dieser Zusammensetzung erhalten und als Katalysator zum Beispiel zur Verminderung von Stickoxiden verwendet werden können.

### Stand der Technik

Die Verbrennung fossiler Energieträger ist die Basis unserer Energieerzeugung und Mobilität. Die Anwesenheit von Sauerstoff sowie stickstoffhaltiger Verbindungen, bzw. atmosphärischen Stickstoffes, führt bei dem Verbrennungsprozess aber zur Bildung von Stickoxiden (NOx), welche zu einer erheblichen Belastung der Umwelt und der menschlichen Gesundheit führen. Seit langem etabliert ist die katalytische Umwandlung der Stickoxide mittels Ammoniak zu unschädlichem Stickstoff. Trägerkatalysatoren spielen insbesondere beim katalytischen Abbau von Stickoxiden eine wichtige Rolle. Besondere Bedeutung hat die selektive katalytische Reduktion (SCR) erlangt, wobei die Stickoxide durch beigegebene stickstoffhaltige Verbindungen, bevorzugt Ammoniak oder Harnstoff, in Anwesenheit eines Katalysators reduziert werden. Die selektive katalytische Reduktion von Stickstoffoxiden mittels Ammoniak (NH₃-SCR) kann wie folgt zusammengefasst werden:

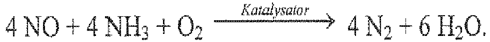

Das bei dieser Reaktion benötige Ammoniak wird bei mobilen Anwendungen oftmals durch die thermische Zersetzung einer stickstoffhaltigen Ausgangsverbindung unmittelbar vor dem Katalysator erzeugt. Kommerzielle Katalysatoren für die SCR sind insbesondere Edelmetalle, Metalloxide und Zeolithe. Eine Übersicht liefert Pio Forzatti, Present status and perspectives in de-NOx SCR catalysis, in: Applied Catalysis A: General 222 (2001) 221-236. Ein wichtiges Katalysatorsystem sind die geträgerten WO₃- bzw. V₂O₅-WO₃-Katalysatoren auf einem TiO₂-Träger, wobei das TiO₂ regelmäßig überwiegend in der Anatasform vorliegt (siehe z.B. US 5,723,404 oder WO2006/044768).

Neben den immer strikteren Gesetzen zum NOx-Ausstoss mit fossilen Kraftstoffen betriebener Maschinen, bzw. Motoren, treten auch die Katalysatorkomponenten immer stärker in den Fokus der Gesetzgebung. So gibt es Bestrebungen, Vanadium als Katalysatorbestandteil gesetzlich zu verbieten, da es sich unter den Betriebsbedingungen verflüchtigen und aufgrund der grundsätzlichen Toxizität V-haltiger Verbindungen zu einer potentiellen Gefahr für den Menschen und die Umwelt werden kann. Technische Lösungen für dieses Problem sind bekannt. So sind Zeolith-basierte Systeme beschrieben, deren aktive Komponenten Kupfer, bzw. Eisen sein können. Weiterhin sind Mischoxide dokumentiert, die eine katalytische Aktivität in der selektiven katalytischen Reduktion von Stickoxiden zeigen. Zum Beispiel basiert das in WO2008/049491 A1 beschriebene System auf einem Ce/Zr-Mischoxid. Weiterhin ist seit langem bekannt, dass Eisen auf TiO₂ eine gewisse katalytische Aktivität zeigt. Neben der Vanadiumproblematik, stellen insbesondere die Alterungsbeständigkeit und die Tieftemperaturaktivität der etablierten Systeme ein Problem dar, da zum einen die V-haltigen Systeme bei Temperaturbelastung eine stark verminderte katalytische Aktivität zeigen. Zudem werden die Anforderungen an den Katalysator hinsichtlich der Tieftemperaturaktivität (ab ca. 200°C) immer größer. Zwar erweisen sich Fe- und Cu-Zeolite in definierten Arbeitsbereichen als durchaus wirksame SCR-Katalysatoren, jedoch zeigen sich Schwächen in der Langzeitstabilität und den Anforderungen an die Gaszusammensetzung für die katalytische Reaktion. Nicht zuletzt die hohen Kosten machen es erforderlich, Lösungen zu finden, die Alternativen zu den zeolitischen Systemen darstellen können. Die in der Patent- und Fachliteratur beschriebenen Systeme basieren dabei in der Regel auf zwar wohl definierten und hochreinen, für die großindustrielle Anwendung daher aber eher unbedeutenden Spezialchemikalien.

EP 410.440 A1 offenbart einen Katalysator, der Titandioxide, vorliegend in der Anatasmodifikation, als Komponente A enthält sowie Wolframoxid als Komponente Bi. Als weiteren Bestandteil B₂ kann Eisenoxid ausgewählt werden. Gemäß dem Dokument kann der Katalysator vollständig als Trägerkatalysator oder aber als Vollkatalysator mit einer Oxidationskatalysatorbeschichtung in Zone 2 ausgeführt sein. Ferner offenbart das Dokument die Gehalte der einzeln zuvor aufgeführten Komponenten sowie weiterer Metalloxide wie Cer- und Zirkonoxid.

EP 317.875 A2 offenbart einen Katylysator zur selektiven Reduktion von Stickstoffoxiden, der die Kompomenten Titan, Wolfram und Eisen umfasst. Ebenso ist in EP 0,317,875 A2 die Herstellung sowohl von Träger- als auch von Vollkatalysatoren unter Verwendung einer Mischung von Verbindung obiger Übergansmetalle aufgezeigt.

US 4.085.193 offenbart eine Katalysatorzusammensetzung zur Reduktion von Stickstoffoxid, die als Hauptbestandteil eine innige Mischung von Titan (Ti) als Komponente A mit mindestens einem Metall, ausgewählt aus der Gruppe bestehend aus Molybdän (Mo), Wolfram (W), Eisen (Fe), Vanadium (V), Nickel (Ni), Kobalt (Co), Kupfer (Cu), umfassen, Chrom (Cr) und Uran (U) als Komponente B in Form ihrer Oxide, und ein Verfahren zur Reduktion von Stickstoffoxiden zu Stickstoff, welches das Inkontaktbringen eines gasförmigen Gemisches, das Stickstoffoxide und molekularen Sauerstoff und ein reduzierendes Gas enthält, mit den vorgenannten Katalysatorzusammensetzungen bei einer erhöhten Temperatur umfasst.

### Zusammenfassung der Erfindung

Vor diesem Hintergrund liegt der vorliegenden Erfindung die Aufgabe zugrunde, einen Rohstoff für die Herstellung katalytisch hochwirksamer sowie alterungsbeständiger SCR-Katalysatoren bereitzustellen, die einen geringen Vanadiumgehalt aufweisen oder frei von Vanadium sind und auf einfache Weise auch in großindustriellem Maßstab in einem wirtschaftlich attraktiven Verfahren zugänglich sind.
Die Aufgabe wird gelöst durch eine Zusammensetzung, umfassend eine Titanverbindung, eine Eisenverbindung und eine Wolframverbindung, wobei die Titanverbindung mikrokristallines Titanoxidhydrat umfasst, das bevorzugt in der TiO₂-Herstellung nach dem Sulfatverfahren bei der Hydrolyse einer titanylsulfathaltigen Lösung erhalten wird, wobei die Titanverbindung eine mikrokristalline Anatasstruktur aufweist, und wobei die Zusammensetzung einen Vanadiumgehalt, gerechnet als V, von weniger als 0,15 Gew.-%, bevorzugt weniger als 0,05 Gew.-%, noch bevorzugter weniger als 0,03 Gew.-%, besonders bevorzugt weniger als 0,01 Gew.-%, bezogen auf den Feststoffgehalt der Zusammensetzung, aufweist, wobei unter mikrokristallin zu verstehen ist, dass die Auswertung der Reflexbreiten von Röntgenpulverdiffraktogrammen des mikrokristallinen Titanoxidhydrats (TiO(OH)₂) nach der Scherrer Gleichung eine mittlere Ausdehnung der Kristallite von 4-10 nm zeigt.

Ferner betrifft die Erfindung auch einen Katalysator oder Katalysatorrohstoff enthaltend die erfindungsgemäße Zusammensetzung.
Die Aufgabe wird alternativ gelöst durch Bereitstellung eines formstabilen katalytisch aktiven Festkörpers, der erhältlich ist durch Mischen der oben definierten Zusammensetzung mit Bindemitteln, Plastifizierern und ggf. weiteren Additiven, Formgebung der so erhaltenen Zusammensetzung, bevorzugt durch Extrudieren, und anschließender Kalzinierung, oder durch Bereitstellung eines formstabilen katalytisch aktiven Festkörpers, der erhältlich ist durch Aufbringen der oben definierten Zusammensetzung, ggf. zusammen mit Bindemitteln, Plastifizierern und weiteren Additiven, auf einen Träger und anschließender Kalzinierung.
Die Erfindung betrifft auch die Verwendung der erfindungsgemäßen Zusammensetzung wie auch des erfindungsgemäßen formstabilen Festkörpers als Katalysator oder zur Herstellung eines Katalysators und ein Verfahren zur Herstellung der Zusammensetzung durch Mischen der Titanverbindung, die Titanverbindung in der TiO₂-Herstellung nach dem Sulfatverfahren bei der Hydrolyse einer titanylsulfathaltigen Lösung erhalten wird und/oder eine mikrokristalline Anatasstruktur aufweist, eine Eisenverbindung und eine Wolframverbindung.

### Figuren

Figur 1 zeigt die katalytische Aktivität (NO-Umsatzwerte) der in den Beispielen 1 und 2 erhaltenen Proben in Abhängigkeit von der Temperatur im Vergleich zu einem Standardmaterial gemäß Beispiel X8 mit 1,5 Gew.% V₂O₅ auf einem TiO₂/WO₃ Träger, der 10 Gew.% WO₃ enthält.
Figur 2 zeigt die katalytische Aktivität (NO-Umsatzwerte) der in den Beispielen 1 und 2 erhaltenen Proben nach Alterung durch Erhitzen auf 750°C für 48 Stunden in Abhängigkeit von der Temperatur im Vergleich zu einem Standardmaterial gemäß Beispiel X8.
Figur 3 zeigt die katalytische Aktivität (NO-Umsatzwerte) der in Beispiel X5 erhaltenen Ti-Fe-Proben auf Basis eines erfindungsgemäß verwendeten mikrokristallinen Anatas-TiO(OH)₂ in Abhängigkeit von der Temperatur im Vergleich zu Ti-Fe-Proben auf Basis eines amorphen (Beispiel X6) bzw. hoch-kristallinen Anatas-TiO₂ (Beispiel X7).

### Detaillierte Beschreibung der Erfindung

Die im Folgenden beschriebenen Ausführungsformen der Erfindung können in beliebiger Weise miteinander kombiniert werden und führen auf diese Weise zu besonders bevorzugten Ausführungsformen.

Die folgende detaillierte Beschreibung offenbart spezifische und/oder bevorzugte Varianten der einzelnen erfindungsgemäßen Merkmale. Es ist zu verstehen, dass auch solche Ausführungsformen erfindungsgemäß und in der Regel sogar bevorzugt sind, die durch beliebige Kombinationen von zwei oder mehreren bevorzugten Ausführungsformen entstehen.

Soweit nicht anderweitig angegeben wird, werden die Begriffe "umfassend" oder "umfasst" im Zusammenhang mit der vorliegenden Anmeldung verwendet, um anzugeben, dass außer den explizit aufgeführten Komponenten optional weitere Komponenten vorhanden sein können. Die Begriffe sind allerdings auch so zu verstehen, dass hiervon auch die Ausführungsformen umfasst sind, die lediglich aus den aufgeführten Komponenten bestehen, also keine weiteren Komponenten als die aufgeführten enthalten.

Soweit nicht anderweitig angegeben wird, sind alle Prozentanteile gewichtsbezogene Prozentanteile. Angaben von Prozentanteilen oder sonstige relative Mengenangaben einer Komponente, die durch einen generischen Begriff definiert ist, sind so zu verstehen, dass sie sich auf die Gesamtmenge aller spezifischen Varianten beziehen, die unter den generischen Begriff fallen. Wenn eine generisch definierte Komponente in einer erfindungsgemäßen Ausführungsform weiterhin auf eine unter den generischen Begriff fallende spezifische Variante spezifiziert wird, so ist dies so zu verstehen, dass zusätzlich keine anderen unter den generischen Begriff fallenden spezifischen Varianten vorliegen, so dass die ursprünglich angegebene Gesamtmenge aller spezifischen Varianten sich nun auf die Menge der einen bestimmten spezifischen Variante bezieht.

### Erfindungsgemäße Zusammensetzung sowie Herstellung eines Katalysators und eines Katalysatorrohstoffes

Die Erfindung betrifft die Herstellung titandioxidhaltiger Rohstoffe für Katalysatoren, die geeignet sind, stickoxidhaltige Verbrennungsabgase durch katalytische selektive Reduktion z.B. mit Ammoniak zu Stickstoff zu reduzieren. Im Einzelnen umfasst die Erfindung folgende Ausführungsformen:
(1) Zusammensetzung, umfassend eine Titanverbindung, eine Eisenverbindung und eine Wolframverbindung, wobei die Titanverbindung mikrokristallines Titanoxidhydrat umfasst, das bevorzugt in der TiO₂-Herstellung nach dem Sulfatverfahren bei der Hydrolyse einer titanylsulfathaltigen Lösung erhalten wird, wobei die Titanverbindung eine mikrokristalline Anatasstruktur aufweist, und die Zusammensetzung einen Vanadiumgehalt, gerechnet als V, von weniger als 0,15 Gew.-%, bevorzugt weniger als 0,05 Gew.-%, noch bevorzugter weniger als 0,03 Gew.-%, besonders bevorzugt weniger als 0,01 Gew.-%, bezogen auf den Feststoffgehalt der Zusammensetzung, aufweist, wobei unter mikrokristallin zu verstehen, dass die Auswertung der Reflexbreiten von Röntgenpulverdiffraktogrammen des mikrokristallinen Titanoxidhydrates (TiO(OH)₂) nach der Scherrer Gleichung eine mittlere Ausdehnung der Kristallite von 4-10 nm zeigt.
(2) Zusammensetzung nach (1), wobei die Titanverbindung mikrokristallines Titanoxidhydrat ist, das bevorzugt in der TiO₂-Herstellung nach dem Sulfatverfahren bei der Hydrolyse einer titanylsulfathaltigen Lösung erhalten wird.
(3) Zusammensetzung nach (1) oder (2), wobedie Titanverbindung mehr als 50 Gew.-%, bevorzugt mehr als 70 Gew.-%, besonders bevorzugt mehr als 90 Gew.-%, aller titanhaltigen Komponenten der Zusammensetzung bildet.
(4) Zusammensetzung nach mindestens einer der vorherigen Ausführungsformen (1) bis (3), dadurch gekennzeichnet, dass die Zusammensetzung eine BET-Oberfläche von größer als 150 m²/g, bevorzugt größer als 200 m²/g, besonders bevorzugt größer als 250 m²/g, aufweist.
(5) Zusammensetzung nach mindestens einer der vorherigen Ausführungsformen, dadurch gekennzeichnet, dass die Eisenverbindung eine organische Eisenverbindung, bevorzugt Ammoniumeisen-III-citrat, ist und/oder der Eisen-Gehalt, gerechnet als Fe₂O₃, von 0,1 bis 5 Gew.-%, bevorzugt von 0,2 bis 3,5 Gew.-%, bezogen auf den Feststoffgehalt der Zusammensetzung, beträgt.
(6) Zusammensetzung nach mindestens einer der vorherigen Ausführungsformen, dadurch gekennzeichnet, dass der Wolfram-Gehalt, gerechnet als WO₃, von 2 bis 30 Gew.-%, bevorzugt von 5 bis 25 Gew.-%, bevorzugt von 5 bis 15 Gew.-% bezogen auf den Feststoffgehalt der Zusammensetzung, beträgt.
(7) Zusammensetzung nach mindestens einer der vorherigen Ausführungsformen, dadurch gekennzeichnet, dass die Zusammensetzung eine Cerverbindung enthält und einen Cer-Gehalt, gerechnet als CeO₂, von 0,01 bis 5 Gew.-%, bevorzugt von 0,1 bis 3,5 Gew.-%, noch bevorzugter von 0,1 bis 2,5 Gew.-%, besonders bevorzugt von 0,5 bis 2,5 Gew.-% bezogen auf den Feststoffgehalt der Zusammensetzung, aufweist.
(8) Zusammensetzung nach mindestens einer der vorherigen Ausführungsformen, dadurch gekennzeichnet, dass die Zusammensetzung einen Zr-Gehalt, gerechnet als ZrO₂, von weniger als 8 Gew.-%, bevorzugt weniger als 5 Gew.-%, besonders bevorzugt weniger als 1 Gew.-%, bezogen auf den Feststoffgehalt der Zusammensetzung, aufweist.
(9) Zusammensetzung nach mindestens einer der vorherigen Ausführungsformen, dadurch gekennzeichnet, dass der Sulfatgehalt der Zusammensetzung 0,05 Gew.-% bis 3,5 Gew.-%, bevorzugt von 0,2 Gew.-% bis 3,0 Gew.-%, besonders bevorzugt von 0,5 Gew.-% bis 2,5 Gew.-%, beträgt.
(10) Zusammensetzung nach mindestens einer der vorherigen Ausführungsformen, dadurch gekennzeichnet, dass das Verhältnis Cl/TiO₂ kleiner 0,0005, bevorzugt kleiner 0,0001, ist.
(11) Zusammensetzung nach mindestens einer der vorherigen Ausführungsformen, dadurch gekennzeichnet, dass diese in Form einer Suspension oder Paste vorliegt.
(12) Verfahren zur Herstellung einer Zusammensetzung nach mindestens einer der vorherigen Ausführungsformen (1) bis (11), umfassend das Mischen einer Titanverbindung, einer Eisenverbindung und einer Wolframverbindung, wobei die Titanverbindung mikrokristallines Titanoxidhydrat umfasst, das bevorzugt in der TiO₂-Herstellung nach dem Sulfatverfahren bei der Hydrolyse einer titanylsulfathaltigen Lösung erhalten wird, wobei die Titanverbindung eine mikrokristalline Anatasstruktur aufweist, und wobei unter mikrokristallin zu verstehen ist, dass die Auswertung der Reflexbreiten von Röntgenpulverdiffraktogrammen des mikrokristallinen Titanoxidhydrates (TiO(OH)₂) nach der Scherrer Gleichung eine mittlere Ausdehnung der Kristallite von 4-10 nm zeight.
(13) Verfahren nach (12), dadurch gekennzeichnet, dass die Titanverbindung mikrokristallines Titanoxidhydrat ist, das bevorzugt in der TiO₂-Herstellung nach dem Sulfatverfahren bei der Hydrolyse einer titanylsulfathaltigen Lösung erhalten wird.
(14) Verfahren nach (12) oder (13), dadurch gekennzeichnet, dass eine wasserlösliche Eisenverbindung und/oder eine wasserlösliche Wolframverbindung auf der Titanverbindung abgeschieden wird.
(15) Verfahren nach mindestens einer der Ausführungsformen (12) bis (14), dadurch gekennzeichnet, dass der Zusammensetzung vor der Verarbeitung zu Katalysatoren keiner thermischen Behandlung oberhalb von 300°C unterzogen worden ist und eine BET-Oberfläche der Zusammensetzung 100 bis 500 m²/g, bevorzugt 200 bis 400 m²/g, erhalten wird.
(16) Verwendung einer Zusammensetzung nach mindestens einer der Ausführungsformen (1) bis (10) zur Herstellung eines Katalysators.
(17) Katalysator oder Katalysatorrohstoff enthaltend eine Zusammensetzung nach einer oder mehreren der Ausführungsformen (1) bis (11).
(18) Formstabiler, katalytisch aktiver Festkörper, erhältlich durch
   (i) Mischen der Zusammensetzung nach einer oder mehreren der Ausführungsformen (1) bis (11) mit Bindemitteln, Weichmachern und ggf. weiteren Additiven, Formgebung der so erhaltenen Zusammensetzung, bevorzugt durch Extrudieren, und anschließender Kalzinierung
      oder
   (ii) Aufbringen der Zusammensetzung nach einer oder mehreren der Ausführungsformen (1) bis (11) ggf. zusammen mit Bindemitteln, Weichmachern und/oder weiteren Additiven, auf ein Trägermaterial und anschließende Kalzinierung.

Die Besonderheit der erfindungsgemäßen Zusammensetzung sowie des Verfahrens zu seiner Herstellung liegt in der Verwendung einer Kombination von Titan-, Eisen- und Wolframverbindungen, wobei die Titanverbindung bevorzugt in der TiO₂-Herstellung nach dem Sulfatverfahren bei der Hydrolyse einer titanylsulfathaltigen Lösung erhalten wird und eine mikrokristalline Anatasstruktur aufweist, Vorzugsweise weist die Titanverbindung eine BET-Oberfläche von größer 150 m²/g, bevorzugt größer 200 m²/g, besonders bevorzugt größer 250 m²/g, auf und besteht aus großtechnisch leicht zugänglichem mikrokristallinen TiO₂.

Als Titanverbindung wird mikrokristallines Titanoxidhydrat verwendet. Das Titanoxidhydrat, auch Titandioxidhydrat oder Metatitansäure genannt, kann durch die chemischen Formeln TiO(OH)₂, H₂TiO₃ oder TiO₂* xH₂O (wobei 0 < x ≤ 1) beschrieben werden.

Die Titanverbindung, beziehungsweise das zuvor beschriebene Titanoxidhydrat, kann aber auch ein durch Röntgendiffraktometrie bestimmtes Verhältnis von Titandioxid in der Anatasform zu Titandioxid in der Rutilform von größer als 90:10, besonders bevorzugt größer als 99:1, aufweisen. Die röntgenkristallinen Phasen können durch Röntgendiffraktometrie qualitativ und quantitativ bestimmt werden (siehe z.B. H. Kirschner und B. Koppelhuber-Bitschnau, Röntgenstrukturanalyse und RietveIdmethode, 5. Auflage, Friedr. Vieweg & Sohn Verlagsgesellschaft mbH, Braunschweig/Wiesbaden, 1994).

Partikel des Titanoxidhydrats können beispielsweise durch Hydrolyse einer schwefelsäurehaltigen Titanylsulfatlösung erhalten werden. Je nach Herkunft und Zusammensetzung der schwefelsäurehaltigen Titanylsulfatlösung wird bei der Hydrolyse eine schwefelsaure Suspension von Titanoxidhydrat erhalten, welche noch unerwünschte Verunreinigungen, insbesondere Schwermetalle, enthalten kann. In der Regel werden deshalb ein oder mehrere Reinigungsschritte vorgenommen, um das Titanoxidhydrat von unerwünschten Verunreinigungen zu befreien.

Bevorzugt wird Titanoxidhydrat verwendet, das durch Hydrolyse von Titanylsulfat entsteht, welches beim Herstellungsverfahren für Titandioxid nach dem Sulfatverfahren anfällt. Dieses Verfahren wird beispielsweise in Industrial Inorganic Pigments, 3. Auflage, Hrsg. Gunter Buxbaum, Wiley-VCH, 2005 beschrieben.

Der Begriff mikrokristallin soll in diesem Zusammenhang so verstanden werden, dass die Auswertung der Reflexbreiten von Röntgenpulverdiffraktogrammen des mikrokristallinen TiO(OH)₂ nach der Scherrer Gleichung eine mittlere Ausdehnung der Kristallite von 4-10 nm zeigt.

Das erfindungsgemäße mikrokristalline Material kann, wie oben beschrieben, durch Hydrolyse einer schwefelsäurehaltigen Titanylsulfatlösung welches beim Herstellungsverfahren für Titandioxid nach dem Sulfatverfahren anfällt, gewonnen werden.

Amorphes Titanoxidhydrat, das im Gegensatz zu dem erfindungsgemäßen mikrokristallinem Material sehr stark verbreiterte Röntgenreflexe zeigt und dessen entsprechende Kristalldomänen Größen von weniger als 4 nm aufweisen, kann aus der Hydrolyse z.B. eines Titanalkoholats, wie z.B. Ti(OEt)₄, gewonnen werden.

Hoch-kristalline Materialien, wie z.B. A-K-1 der Crenox GmbH, können durch thermische Behandlung von mikrokristallinem oder amorphem TiO(OH)₂ erhalten werden und weisen Kristallitgrößen gemäß der Scherrerauswertung von größer 10 nm auf. Typische Eigenschaften des A-K-1 sind Kristallitgrößen von ca. 20 nm und eine BET Oberfläche von ca. 90m²/g.

Überraschenderweise konnte gefunden werden, dass sich insbesondere die Verwendung von mikrokristallinem TiO(OH)₂ als Ausgangsmaterial für die Herstellung von katalytisch aktivem Material als vorteilhaft gegenüber einem amorphen bzw. einem hoch-kristallinem TiO₂ gezeigt hat.

Der Sulfatgehalt der Titanverbindung bzw. des Titanoxidhydrat beträgt vorzugsweise bis zu 2,5 Gew.%, bezogen auf TiO₂. So kann der Sulfatgehalt 0,5 bis 2,5, bevorzugt 1,5 bis 2,5 Gew. %, bezogen auf TiO₂ betragen, aber auch kleiner als 0,5 Gew.% sein.

Die Titanverbindung, z.B. das Titanoxidhydrat, bzw. die Zusammensetzung weist vorzugsweise eine BET-Oberfläche von größer 150 m²/g, bevorzugt größer 200m²/g, besonders bevorzugt größer 250 m²/g auf,. Die maximale BET-Oberfläche der Titanverbindung beträgt vorzugsweise 500 m²/g liegt. Die Bestimmung der BET-Oberfläche erfolgt dabei nach DIN ISO 9277 mittels N₂ bei 77 K an einer bei 140 °C während 1 Stunde entgasten und getrockneten Probe aus den Titanoxidhydratpartikeln. Die Auswertung erfolgt über Mehrpunktbestimmung (10-Punkt-Bestimmung).

Die erfindungsgemäße Zusammensetzung liegt vorzugsweise so vor, dass die Eisen- und Wolframverbindung auf einem TiO₂-haltigen Träger aufgebracht sind, wobei bevorzugt wasserlösliche Verbindungen verwendet werden.

Die erfindungsgemäße Zusammensetzung urnfasst vorzugsweise Natrium und das Massenverhältnis Na/Ti, ausgedrückt als Na₂O/TiO₂, ist vorzugsweise kleiner 0,001, besonders bevorzugt kleiner 0,0001.

Die erfindungsgemäße Zusammensetzung umfasst ferner vorzugsweise Verbindungen der Elemente Si oder Mn oder Kombinationen dieser Elemente als weitere Zusätze.

In der erfindungsgemäßen Zusammensetzung kann der Mengenanteil von SiO₂ vorzugsweise von 0 bis 15 Gew.-%, besonders bevorzugt von 5 bis 10 Gew.-%, und/oder der Mengenanteil des Mangans, angegeben als MnO₂, vorzugsweise von 0 bis 20 Gew.-%, bevorzugt von 1 bis 10 Gew.-%, bevorzugt von 2 bis 5 Gew.-% betragen.

Die erfindungsgemäße Zusammensetzung kann vor der Verarbeitung zu Katalysatoren einer thermischen Behandlung oberhalb von 300°C unterzogen werden, und die BET-Oberfläche der Zusammensetzung nach der thermischen Behandlung beträgt bevorzugt 10 bis 250 m²/g, besonders bevorzugt von 50 bis 150 m²/g.

Alternativ kann die erfindungsgemäße Zusammensetzung vor der Verarbeitung zu Katalysatoren keiner thermischen Behandlung oberhalb von 300°C unterzogen werden, und die BET-Oberfläche der Zusammensetzung beträgt in diesem Fall bevorzugt 100 bis 500 m²/g, besonders bevorzugt 200 bis 400 m²/g.

Die Herstellung der erfindungsgemäßen Zusammensetzung geht dabei vom Titanoxidhydrat aus, welches als wässrige Suspension z.B. über ein Imprägnierungsverfahren mit einer katalytisch aktiven Komponente versehen wird. Die katalytisch aktive Komponenten bzw. Promotoren Eisen und Wolfram der Zusammensetzung werden über eine wasserlösliche Verbindung, z.B. Ammoniumeisencitrat oder Ammoniumparawolframat, eingebracht bzw. auf dem Titanoxidhydrat abgeschieden, welche sich unter thermischer Behandlung zu dem jeweiligen Oxid umsetzt. Dabei ist es unerheblich, ob sich als Folge der Beladung bereits eine oxidische, eine hydroxidische, die reine Vorläuferverbindung oder Mischformen dieser drei Spezies auf dem TiO(OH)₂ abgeschieden haben.

Nach der Abscheidung wird ein pH-Wert von vorzugsweise 2-9, besonders bevorzugt von 3 bis 7,5, erhalten bzw. eingestellt.

Typischerweise wird das in Wasser suspendierte TiO(OH)₂ unter Rühren mit den jeweiligen Metalloxidprecursoren versetzt. Die Zugabe kann dabei in fester, oder aber auch als wässrige Lösung der entsprechenden Metallsalze erfolgen. Die Reihenfolge der Zugabe ist dabei frei wählbar und es können die jeweiligen Metallsalze auch zuvor gemeinsam gelöst und sodann der TiO(OH)₂-Suspension zugefügt werden. Die Behandlung des Ti(OH)₂ mit den Metallsalzen erfordert es nur, dass sichergestellt wird, dass keine ungelösten Bestandteile der Metallsalze vor Trocknung der erfindungsgemäßen Zusammensetzung in der Suspension verbleiben, da hierdurch die Abscheidung der Metallsalze auf dem TiO(OH)₂ unterbleiben würden. Nach der Zugabe der Metallsalze ist darauf zu achten, dass es nicht aufgrund von Änderungen des pH-Wertes zum Ausfällen von z.B. Metallhydroxiden kommt, da hierdurch ebenfalls keine möglichst homogene Abscheidung der Metallspezies auf dem TiO(OH)₂ gewährleistet werden kann. Gegebenenfalls kann es daher erforderlich sein in Abhängigkeit von den gewählten Metallsalzen eine Korrektur des pH-Wertes z.B. mithilfe von Ammoniak oder Schwefelsäure vorzunehmen. Die Dauer und die Temperatur der Behandlung des TiO(OH)₂ mit den Metallsalzen richten sich im Falle der Zugabe der Salze in fester Form nach der Löslichkeit der Metallsalze. So kann es bei gut löslichen Verbindungen, wie den in den Beispielen verwendeten Salzen Ammoniumeisencitrat und Ammoniumparawolframat ausreichend sein, die Mischung für 30 Minuten bei Raumtemperatur zu Rühren. Längere Behandlungszeiten zeigen keinerlei negativen Effekt auf die katalytischen Eigenschaften. Eine erfindungsgemäße Zusammensetzung wird nach der Behandlung mit den Metallsalzen erhalten. Für die Verwendung zur Herstellung von DeNOx-Vollkatalysatoren, die durch Extrusion gewonnen werden, kann es erforderlich sein, die Zusammensetzung vom Wasser zu befreien und die Metallsalze in die entsprechenden Oxide zu Überführen. Die Entfernung des Wassers kann auf unterschiedlichen Wegen erfolgen. So haben sich sowohl das Entfernen über die Destillation per Rotationsverdampfer im Labormaßstab, als auch das Eindampfen in z.B. Glas oder Metallgefäßen im Trockenschrank (130°C und Normaldruck). Großtechnisch kann die Sprühtrocknung, oder eine Spinflash Trocknung angewendet werden. Ebenso kann der Wassergehalt vor der Kalzinierung durch Filterpressen verringert werden.

Vor der Verwendung als Katalysator muss nur sichergestellt werden, dass die katalytisch aktiven Spezies erzeugt werden. Dies wird in der Regel durch einen Kalzinierungsschritt gewährleistet. Diese Kalzinierung kann beispielhaft in einem Drehrohrofen per indirekter, aber auch mittels direkter Beheizung erfolgen. Ebenso kann ein hydrothermaler Kalzinierungsschritt die katalytisch aktiven Spezies erzeugen. Statische Kalzinierungen z.B. im Muffelofen, können ebenso wie hoch dynamische Kalzinierungen über z.B. die Kurzzeitkalzinierung mit Verweilzeiten von weniger als einer Sekunde bis zu wenigen zehn Sekunden in sogenannten Pulsationsreaktoren hilfreich sein, die katalytisch aktiven Spezies zu erhalten.

Erfindungsgemäß können Zusammensetzungen bzw. Katalysatorrohstoffe und Katalysatoren erhalten werden, die eine hohe Temperaturstabilität zeigen. Dabei kann es zur Erhöhung der thermischen Stabilität von Vorteil sein, stabilisierende Substanzen auf das TiO₂ aufzubringen. Hierbei können SiO₂, Al₂O₃ oder z.B. P₂O₅ als Zielverbindungen in Betracht gezogen werden, Im vorliegenden Fall ist beispielhaft SiO₂ auf das TiO(OH)₂ aufgefällt worden. Nachfolgende Imprägnierungsschritte erlauben dann das Einbringen katalytisch aktiver bzw. strukturell stabilisierender Komponenten. Metalloxide, die einen positiven Einfluss auf die katalytische Aktivität und/oder thermische Stabilität haben sind z.B. die Oxide des Wolframs, des Eisens, des Cers, des Siliziums und/oder des Mangans.

Gegebenenfalls, z.B. wenn SiO₂ durch Ausfällen aus NaSiO₃ eingebracht wird, können zusätzliche Filtrations- und Waschschritte vor der Aufbringung einer weiteren katalytisch aktiven bzw. strukturell stabilisierenden Komponente notwendig werden.

### Der formstabile katalytisch aktivierte Festkörper

Zur Herstellung des erfindungsgemäßen formstabilen Festkörpers aus der erfindungsgemäßen Zusammensetzung wird diese mit organischen Bindemitteln und ggf.

Weichmachern (z.B. Alkalistearate) und weiteren Additiven wie Glasfasern vermischt, vorzugsweise unter Anwesenheit von Wasser, um eine keramische Paste herzustellen. Die Zusammensetzung wird hierbei vorzugsweise in einer Menge von 60 bis 90 Gew.-%, insbesondere 70 bis 80 Gew.-% in Bezug auf die so erhaltene Mischung verwendet.

Als Bindemittel und/oder Thixotropiemittel können Schichtsilicate wie Bentonit und Kaolin herangezogen werden. Typische Beispiele für diese Minerale mit schichtförmigen Baueinheiten (Phyllosilicate) sind Serpentin Mg₃(OH)₄[Si₂O₅], Kaolinit Al₂-(OH)₄[Si₂-O₅], sowie Montmorillonit als Hauptmineral des Bentonits.

Weitere Additive, die in der Mischung eingesetzt werden können, umfassen beispielsweise Glasfasern zur Strukturverstärkung (z.B. mit einem Anteil von 5 bis 15 Gew.-%), Acrylpolymere als Bindemittel, Cellulose oder Cellulosederivate als Quell-/Plastifizierungsmittel, Ammoniumhydroxid, organische Säuren wie z.B. Milchsäure oder Oxalsäure als Lösungsvermittler und/oder Komplexbildner, sowie Aminoalkohole wie z.B. Aminomethylpropanol oder Monoethanolamin zur pH-Einstellung.

Bei der weiteren Verarbeitung des so erhaltenen Gemisches aus dem erfindungsgemäßen Katalysatorrohstoff und den Bindemitteln und ggf. Weichmachern und weiteren Additiven kann im wesentlichen zwischen zwei Varianten unterschieden werden, nämlich zwischen der Herstellung von so genannten Vollkatalysatoren und der Herstellung von Schichtkatalysatoren, bei denen das katalytisch aktive Pulver auf einen festen Träger aufgebracht wird.

Unter Vollkatalysator versteht man einen formstabilen Festkörper, der vollständig bzw. durchgehend aus dem oben beschriebenen Gemisch aus dem erfindungsgemäßen Katalysatorrohstoff und den Bindemitteln und ggf. Weichmachern und weiteren Additiven hergestellt wird. Unter "formstabil" wird erfindungsgemäß im Wesentlichen "nichtpulverig" und selbsttragend verstanden. Hierzu wird dieses Gemisch vorzugsweise geknetet und dann in eine bestimmte Form gebracht, vorzugsweise durch Extrudieren oder Pressen. Besonders bevorzugt wird das Gemisch zu einem keramischen Monolithen extrudiert, der als wabenförmiger Festkörper beschrieben werden kann. Hierbei können die Waben beliebige, dem Fachmann bekannte geometrische Formen annehmen. Die Waben sind im Allgemeinen quadratisch im Querschnitt und nicht sechseckig, wie der Name vermuten lässt. Bevorzugt werden formstabile Festkörper mit einem Trägermaterial-Gehalt von mindestens 80 Gew.-% in Bezug auf die Gesamtmasse.

Nach dem Extrudieren bzw. Pressen wird der Festkörper getrocknet und anschließend kalziniert. Die so erhaltenen Wabenkörper weisen vorzugsweise eine Wanddicke von 0,5 bis 2 mm und eine Kanalbreite von 3 bis 10 mm auf.

Insbesondere für die Verwendung als Rohstoff für Vollkatalysatoren, die durch Extrusion hergestellt werden, können zu hohe BET-Oberflächen zu Verarbeitungsproblemen im Knet- und/oder Extrusionsprozess führen. Die Reduzierung der BET Oberfläche in den bevorzugten Bereich von 50 bis 150 m²/g kann durch Kalzinierung z.B. bei Temperaturen von 550°C für eine Stunde erfolgen.

Bei der Herstellung von Schichtkatalysatoren wird wie folgt vorgegangen: Die erfindungsgemäße Zusammensetzung mit ggf. Bindemitteln, Weichmachern und/oder weiteren Additiven wird auf ein Trägermaterial aufgebracht und anschließend getrocknet und kalziniert. Das Trägermaterial kann ein geometrischer Körper, vorzugsweise formgebende und ggf. perforierte Platten, z.B. aus Papier oder Keramik, oder Metall bzw. Metallnetze sein. Typischerweise verwendete keramische Wabenkörper, die als Trägermaterial für die Beschichtung mit der erfindungsgemäßen Zusammensetzung fungieren können, bestehen z.B. aus Cordierit.

### Anwendungen in der Katalyse

Die erfindungsgemäßen Zusammensetzungen und Formkörper eignen sich gut als Katalysatoren.

Der erfindungsgemäße Katalysatorrohstoff und hiervon abgeleiteten Produkte eignen sich sehr gut zur Verwendung in Verfahren zur *Rauchgasentstickung (DeNOx)* als Denitrierungskatalysator für eine effiziente katalytische Reduktion von Stickstoffoxiden (NOₓ) in Abgasen mit stickstoffhaltigen Verbindungen, bevorzugt Ammoniak oder stickstoffhaltigen Ausgangsverbindungen, die sich während oder kurz vor der Reaktion mit NOₓ zu Ammoniak umwandein, hierbei besonders bevorzugt Harnstoff. Vor allem die Verwendung in der selektiven katalytischen Reduktion (SCR) von Stickstoffoxiden mittels Ammoniak gemäß 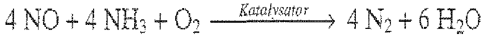 ist hierbei von Interesse. Einsatzgebiete sind im mobilen Bereich Kraftfahrzeuge, PKW, LKW, Schiffe sowie im stationären Bereich etwa Kraftwerke, Kohlekraftwerke, Gaskraftwerke, Müllverbrennungsanlagen, Anlagen zur Salpetersäureproduktion oder - Verarbeitung, Stahlwerke.

Die Erfindung stellt insbesondere die Verwendung des erfindungsgemäßen formstabilen Festkörpers als Katalysator zur Verminderung von Stickoxiden bereit, insbesondere für die selektive katalytische Reduktion (SCR), und zwar auch für die schnelle SCR (fast SCR), bei der folgende Reaktionen ablaufen:
2 NH₃ + NO + NO₂ -> 2 N₂ + 3 H₂O (NO und NO₂ im Abgas, schnell)
8 NH₃ + 6 NO₂ -> 7 N₂ + 12 H₂O (nur NO₂ im Abgas, langsamer)

Insbesondere bevorzugt ist die Verwendung des erfindungsgemäßen Katalysators in einem Kraftfahrzeug, besonders bevorzugt in Kombination mit einem Oxidationskatalysator, vorzugsweise nachgeschaltet.

### Beispiele

Die Herstellung erfindungsgemäßer DeNOx-Katalysatorpulver erfolgt über einfache wässrige Imprägnierungsschritte, welche beispielhaft in den Beispielen 1-4 beschrieben werden. Das SiO₂ wurde durch Ausfällen aus NaSiO₃ eingebracht, wodurch ein Filtrations- und Waschschritt nötig war.

### Herstellungsbeispiele

### Herstellungsbeispiel 1: Ti-W-Fe-Matenat

3036g einer ca. 25%-igen Suspension des erfindungsgemäßen mikrokristallinen TiO(OH)₂ werden unter Rühren mit 247,19 g Ammoniumparawolframat versetzt. Nach ca. 30 Minuten Rühren werden 75g Ammoniumeisencitrat ebenfalls unter Rühren zugegeben. Es wird anschließend erneut für ca. 30 Min. gerührt. Nach Entfernen des Lösungsmittels am Rotationsverdampfer und Trocknung im Trockenschrank für 2 Stunden bei 130°C wird die erfindungsgemäße Zusammensetzung als Pulver erhalten.

### Herstellungsbeispiel 2: Ti-W-Fe-Ce-Material

950g einer ca. 15%- igen Suspension des erfindungsgemäßen mikrokristallinen TiO(OH)₂ werden unter Rühren mit 22,47 g Ammoniumparawolframat versetzt. Nach ca. 30 Minuten Rühren werden 68,47g Cer(III)acetat ebenfalls unter Rühren zugegeben. Es wird anschließend erneut für ca. 30 Minuten gerührt und nachfolgend werden 20,23g Ammoniumeisencitrat unter Rühren zugegeben. Nach 30 Minuten Nachrührzeit wird das Lösungsmittel am Rotationsverdampfer entfernt und es erfolgt die Trocknung im Trockenschrank für 2 Stunden bei 130°C.

### Herstellungsbeispiel 3: Ti-W-Fe-Si-Material

1943g einer 10%-igen Suspension des erfindungsgemäßen mikrokristallinen TiO(OH)₂ werden innerhalb von 5 Minuten mit 87,75g Na-Wasserglas-Lösung (27,66% SiO₂) versetzt. Nach der Zugabe wird ein pH-Wert von 6,0 eingestellt. Nach Filtration wird der Rückstand solange mit heißem Wasser gewaschen, bis eine Endleitfähigkeit des Filtrats von <70µS/cm erreicht worden ist. Der erhaltene Feststoff wird in ca. 1 L Wasser suspendiert und unter Rühren mit 83,41g Ammoniumparawolframat versetzt. Nach ca. 30 Minuten erfolgt die Zugabe von 33,37g Ammoniumeisencitrat. Es wird erneut für ca. 30 Minuten gerührt und die erhaltene Suspension vom Lösungsmittel durch eine Destillation am Rotationsverdampfer entfernt. Nach der Trocknung bei 130°C im Umlufttrockenschrank für 2 Stunden wird die erfindungsgemäße Zusammensetzung als Pulver erhalten.

### Herstellungsbeispiel 4: Ti-W-Fe-Si-Ce-Material

1565g einer 10%-igen Suspension des erfindungsgemäßen mikrokristallinen TiO(OH)₂ werden innerhalb von 5 Minuten mit 70,67g Na-Wasserglas-Lösung (27,66% SiO₂) versetzt. Nach der Zugabe wird ein pH-Wert von 6,0 eingestellt. Nach Filtration wird der Rückstand solange mit heißem Wasser gewaschen, bis eine Endleitfähigkeit des Filtrats von <70µS/cm erreicht worden ist. Der erhaltene Feststoff wird in ca. 1 L Wasser suspendiert und unter Rühren mit 75,72g Ammoniumparawolframat versetzt. Nach ca. 30 Minuten erfolgt die Zugabe von 126,22g Ce(NO₃)₃. Nach ca. 30 Minuten werden 30,30g Ammoniumeisencitrat unter rühren zugegeben. Es wird erneut für ca. 30 gerührt und die erhaltene Suspension vom Lösungsmittel über Destillation am Rotationsverdampfer befreit. Nach der Trocknung bei 130°C im Umlufttrockenschrank für 2 Stunden wird die erfindungsgemäße Zusammensetzung als Pulver erhalten

### Herstellungsbeispiel X1 (Vergleichsbeispiel): Ti-W-Fe auf amorphem TiO(OH)₂, Precursor: Titanylsulfat

534,51g einer Titanylsulfatlösung (mit einem TiO₂-Gehalt von umgerechnet 9,23%) werden mit 25%iger Ammoniaklösung auf einen pH-Wert von 6,5 gebracht. Die entstehende Suspension wird für weitere 30 Minuten gerührt, filtriert und bis zu einer Leitfähigkeit von unter 70µS/cm gewaschen. Das so erhaltene Material wird mit Wasser versetzt und zu 531g dieser Suspension (ca. 8,08% TiO₂ enthaltend) werden 14,65 g Ammoniumparawolframat unter Rühren zugegeben. Nach weiteren 30 Minuten erfolgt die Zugabe von 8,33 g Ammoniumeisencitrat. Die Suspension wird nach erneutem Rühren für 30 Minuten durch Destillation und nachfolgender Trocknung im Trockenschrank vom Lösungsmittel befreit.

### Herstellungsbeispiel X2 (Vergleichsbeispiel): Ti-W-Fe auf amorphem TiO(OH)₂, Precursor: Tetraethylorthotitanat (TEOT)

250ml TEOT werden mit 2730 ml Ethanol versetzt, Zu dieser Lösung wird langsam unter Rühren ein Gemisch aus 150 ml Ethanol / 2830 ml H₂O zugetropft. Nach vollständiger Zugabe wird für 1 Stunde gerührt und der Rückstand anschließend abfiltriert und mit Ethanol gewaschen. Der Filterrückstand wird mit Wasser zu einer ca. 20%-igen Suspension angemaischt. 442g dieser Suspension dieser Suspension werden mit 12,66 g Ammoniumparawolframat unter Rühren versetzt. Nach weiteren 30 Minuten erfolgt die Zugabe von 7,17 g Ammoniumeisencitrat. Die Suspension wird nach erneutem Rühren für 30 Minuten durch Destillation und nachfolgender Trocknung im Trockenschrank vom Lösungsmittel befreit.

### Herstellungsbeispiel X3 (Vergleichsbeispiel): Ti-W-Fe auf amorphem TiO(OH)₂, Precursor: Tetraethylorthotitanat (TEOT) mit Zugabe H₂SO₄-Zugabe

442g dieser Suspension werden mit 0,64g 96%-iger H₂SO₄ versetzt und für 30 Minuten nachgerührt. Anschließend werden 12,66 g Ammoniumparawolframat unter Rühren zugegeben. Nach weiteren 30 Minuten erfolgt die Zugabe von 7,17 g Ammoniumeisencitrat. Die Suspension wird nach erneutem Rühren für 30 Minuten durch Destillation und nachfolgender Trocknung im Trockenschrank vom Lösungsmittel befreit.

### Herstellungsbeispiel X4 (Vergleichsbeispiel): Ti-W-Fe-auf hoch-kristallinem TiO₂

Zu 196,24g H₂O werden 50,46g AK-1 (kommerziell verfügbares, hoch-kristallines TiO₂ der Crenox GmbH mit einer Kristallitgröße größer als 10 nm und einer BET-Oberfläche von ca. 90m²/g) in 5 Minuten zugegeben. Der so erhaltenen 20%igen Suspension werden unter Rühren 16.07g Ammoniumparawolframat beigefügt und es wird für weitere 30 Minuten gerührt. Nach der Zugabe von 6,36g Ammoniumeisencitrat und 30 Minuten Rühren wird die Suspension zur Trockne eingeengt (z.B. am Rotationsverdampfer).

### Herstellungsbeispiel X5 (Vergleichsbeispiel): Ti- Fe auf mikrokristallinem Titanoxidhydrat gemäß Erfindung.

2244g einer TiO(OH)₂ Suspension (entsprechend 490 g TiO₂) werden unter Rühren mit 66,7 g Ammoniumeisencitrat versetzt und es wird für 30 Minuten gerührt. Die Suspension wird durch Destillation und nachfolgender Trocknung im Trockenschrank vom Lösungsmittel befreit.

### Herstellungsbeispiel X6 (Vergleichsbeispiel): Ti- Fe auf amorphem Titanoxidhydrat frisch aus TiOSO₄

1062,9g Titanylsulfatlösung mit einem TiO₂-Gehalt von 9,22 % werden mit 25%-iger Ammonikalösung auf pH 7,5 eingestellt und der ausfallende Niederschlag abfiltriert und mit Wasser auf eine Endleitfähigkeit unter 70µS/cm gewaschen. Der mit Wasser resuspendierte Niederschlag (ca. 20% TiO₂) wird unter Rühren mit 12,45g Ammoniumeisencitrat versetzt und für 30 Minuten gerührt. Die Suspension wird durch Destillation und nachfolgender Trocknung im Trockenschrank vom Lösungsmittel befreit.

### Herstellungsbeispiel X7 (Vergleichsbeispiel): Ti- Fe auf kristalline Ti-Precursor:

Zu 1948,8g Wasser werden 501,2g A-K-1 (kommerziell verfügbares hoch-kristallines TiO₂ der Crenox GmbH mit einer Kristallitgröße größer als 10 nm und einer BET-Oberfläche von ca. 90m²/g) gegeben. Diese ca. 20%ige Suspension wird unter Rühren mit 66,7g Ammoniumeisencitrat versetzt. Die Suspension wird nach 30 Minuten Rühren durch Destillation und nachfolgender Trocknung im Trockenschrank vom Lösungsmittel befreit.

### Herstellungsbeispiel X8 (Vergleichsbeispiel): Ti/W/V - Vanadium-haltiges Vergleichsprodukt:

In einem 2l-Rundkolben werden 200g A-DW -1 (kommerziell verfügbares hoch-kristallines TiO₂ der Crenox GmbH mit 10-Gew.-% WO₃ und einer Kristallitgröße größer als 10 nm und einer BET-Oberfläche von ca. 90m²/g) in 1000mL Wasser suspendiert und unter Rühren mit 3,87g Ammoniummetavanadat versetzt. Unter Rührer, wird sie 10 Minuten auf 70°C erhitzt und anschließend das Lösungsmittel im Vakuum entfernt. Nach dem Trocknen im Trockenschrank und der Kalzination erhält man das fertige, katalytisch aktive Vergleichsmaterial mit 1,5 Gew.-% V₂O₅ bezogen auf das eingesetzte A-DW-1.

### Beispiel zur Bestimmung der katalytischen Aktivität

Zur Bestimmung der katalytischen Aktivität erfolgt eine Kalzinierung der gemäß den Herstellungsbeispielen erhaltenen Rohmaterialien für 1 Stunde bei 550°C im Muffelofen, bei der die Metalloxidprecursoren zu ihren Oxiden umgesetzt werden.

Zur Untersuchung der Alterungsbeständigkeit wurden die zunächst bei 550°C für eine Stunde kalzinierten Pulvern einer weiteren thermischen Behandlung im Muffelofen für 48 Stunden bei 750°C unterzogen.

Vor dem Einsatz in katalytischen Messungen wurden die Proben durch Pressen, anschließendes Zerkleinern und Sieben in eine Kornfraktion mit Partikeldurchmessern zwischen 255 bis 350 µm überführt (Siebfraktion).

Um die Belastung des Katalysators zu quantifizieren, wurde die Raumgeschwindigkeit (GHSV, gas hourly space velocity) verwendet. Diese ist definiert als der Quotient aus Gesamtvolumenstrom des Eduktgases und Katalysatorvolumen: GHSV = V_{Gas} / (m_{Kat} / ρ_{Kat}). In diesem Fall wurde ein Gesamtvolumenstrom von 183,4 ml/min über 75 mg des Katalysators geleitet, woraus eine Raumgeschwindigkeit GHSV von 100.000 h⁻¹ resultiert. In allen Fällen enthielt das Eduktgasgemisch 1000 ppm NO, 1000 ppm NH₃ und 2% O₂ in Helium. Die Analyse des Produktgasgemisches erfolgte mittels einer Kombination photometrischer Messgeräte (BINOS) zur Detektion von NO, NO₂, sowie NH₃.

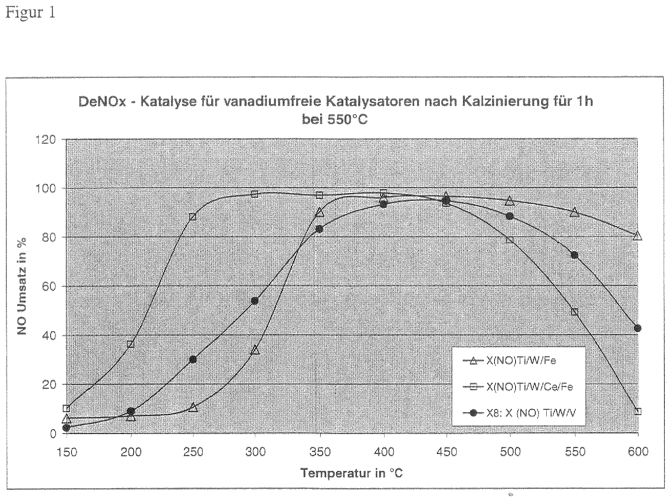

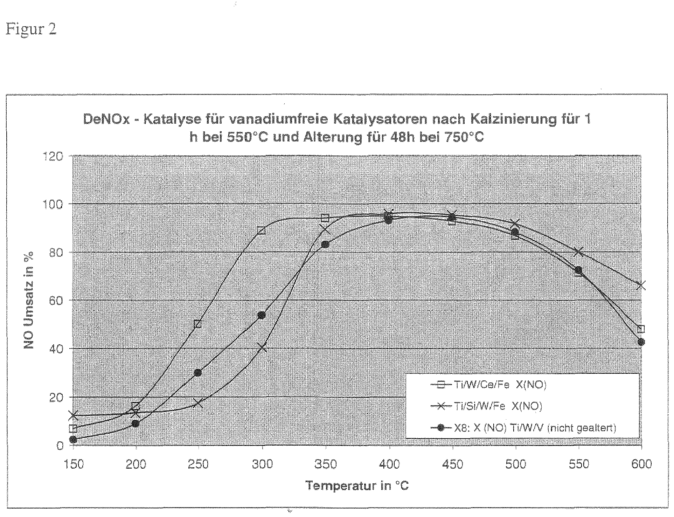

Die Figuren 1 und 2 zeigen die im Katalyseteststand erzielten NO-Umsatzwerte der Proben gemäß den Beispielen 1 und 2 in Abhängigkeit der Temperatur. Als Vergleich ist die Kurve für ein Standardmaterial mit 1,5 Gew.-% V₂O₅ auf einem TiO₂/WO₃ Träger, der 10 Gew.-% WO₃ enthält, angegeben. In Figur 1 ist deutlich erkennbar, dass das erfindungsgemäße Material mit der Zusammensetzung Ti/W/Fe im oberen Temperaturbereich von ca. 450-600°C wesentlicheVorteile gegenüber dem vanadiumhaltigen Standardmaterial gemäß Beispiel X8 zeigt. Im Tieftemperaturbereich (ca. 200-300°C) zeigt das System Ti/W/Ce/Fe exzellente Umsatzwerte. Nach Alterung der Pulver durch Erhitzen auf 750°C für 48 Stunden (Figur 2) erkennt man geringe Umsatzeinbußen für das System Ti/W/Ce/Fe im unteren Temperaturbereich. Die gefundenen Umsätze liegen aber noch immer signifikant über den Werten des nichtgealterten Vergleichsmaterials gemäß Beispiel X8. Im hohen Temperaturbereich von ca. 450-600°C erkennt man für das System Ti/W/Ce/Fe nun sogar eine höhere Aktivität, die nahezu identisch mit der des Vergleichsmaterials ist. Im Falle des Systems Ti/W/Fe erhält man mit der Einbringung von SiO₂ ein Material, das auch nach Alterung vor allem im hohen Temperaturbereich sehr gute Katalysewerte liefert.

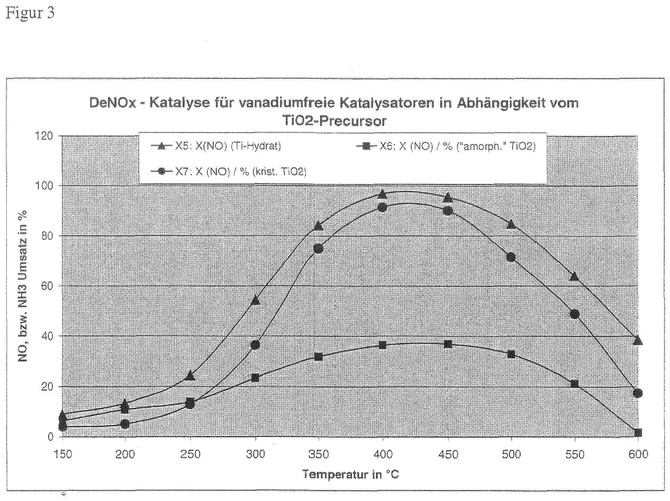

Figur 3 zeigt, dass das mikrokristalline Anatas-TiO₂ in der erfindungsgemäß verwendeten Form grundsätzliche Vorteile gegenüber einem amorphen bzw. hoch-kristallinen Anatas-TiO₂ bei der Herstellung erfindungsgemäßer DeNOx-Katalysatoren bietet. Die Umsatzkurven zeigen deutlich, dass für identisch zusammengesetzte Systeme, die sich einzig in der Kristallinität des verwendeten Anatas-TiO₂ unterscheiden, deutliche bessere Werte für das erfindungsgemäß verwendete mikrokristalline TiO₂ gefunden werden.

## Patentansprüche

1. Zusammensetzung, umfassend eine Titanverbindung, eine Eisenverbindung und eine Wolframverbindung, wobei die Titanverbindung mikrokristallines Titanoxidhydrat umfasst, das bevorzugt in der TiO₂-Herstellung nach dem Sulfatverfahren bei der Hydrolyse einer titanylsulfathaltigen Lösung erhalten wird, wobei die Titanverbindung eine mikrokristalline Anatasstruktur aufweist, und wobei die Zusammensetzung einen Vanadiumgehalt, gerechnet als V, von weniger als 0,15 Gew.-%, bevorzugt weniger als 0,05 Gew.-%, noch bevorzugter weniger als 0,03 Gew.-%, besonders bevorzugt weniger als 0,01 Gew.-%, bezogen auf den Feststoffgehalt der Zusammensetzung, aufweist,
wobei unter mikrokristallin zu verstehen ist, dass die Auswertung der Reflexbreiten von Röntgenpulverdiffraktogrammen des mikrokristallinen Titanoxidhydrats (TiO(OH)₂) nach der Scherrer Gleichung eine mittlere Ausdehnung der Kristallite von 4-10 nm zeigt.

2. Zusammensetzung nach Anspruch 1, **dadurch gekennzeichnet, dass** die Titanverbindung mikrokristallines Titanoxidhydrat ist, das bevorzugt in der TiO₂-Herstellung nach dem Sulfatverfahren bei der Hydrolyse einer titanylsulfathaltigen Lösung erhalten wird.

3. Zusammensetzung nach Anspruch 1 oder 2, **dadurch gekennzeichnet, dass** die Titanverbindung mehr als 50 Gew.-%, bevorzugt mehr als 70 Gew.-%, besonders bevorzugt mehr als 90 Gew.-%, aller titanhaltigen Komponenten der Zusammensetzung bildet.

4. Zusammensetzung nach mindestens einem der vorherigen Ansprüche, **dadurch gekennzeichnet, dass** die Zusammensetzung eine BET-Oberfläche von größer als 150 m²/g, bevorzugt größer als 200 m²/g, besonders bevorzugt größer als 250 m²/g, aufweist.

5. Zusammensetzung nach mindestens einem der vorherigen Ansprüche, **dadurch gekennzeichnet, dass** die Eisenverbindung eine organische Eisenverbindung, bevorzugt Ammoniumeisen-III-citrat, ist, und/oder dass der Eisen-Gehalt, gerechnet als Fe₂O₃, von 0,1 bis 5 Gew.-%, bevorzugt von 0,2 bis 3,5 Gew.-%, bezogen auf den Feststoffgehalt der Zusammensetzung, beträgt.

6. Zusammensetzung nach mindestens einem der vorherigen Ansprüche, **dadurch gekennzeichnet, dass** der Wolfram-Gehalt, gerechnet als WO₃, von 2 bis 30 Gew.-%, bevorzugt von 5 bis 25 Gew.-%, bevorzugt von 5 bis 15 Gew.-% bezogen auf den Feststoffgehalt der Zusammensetzung, beträgt.

7. Zusammensetzung nach mindestens einem der vorherigen Ansprüche, **dadurch gekennzeichnet, dass** die Zusammensetzung eine Cerverbindung enthält und einen Cer-Gehalt, gerechnet als CeO₂, von 0,01 bis 5 Gew.-%, bevorzugt von 0,1 bis 3,5 Gew.-%, noch bevorzugter von 0,1 bis 2,5 Gew.-%, besonders bevorzugt von 0,5 bis 2,5 Gew.-% bezogen auf den Feststoffgehalt der Zusammensetzung, aufweist.

8. Zusammensetzung nach mindestens einem der vorherigen Ansprüche, **dadurch gekennzeichnet, dass** die Zusammensetzung einen Zr-Gehalt, gerechnet als ZrO₂, von weniger als 8 Gew.-%, bevorzugt weniger als 5 Gew.-%, besonders bevorzugt weniger als 1 Gew.-%, bezogen auf den Feststoffgehalt der Zusammensetzung, aufweist.

9. Zusammensetzung nach mindestens einem der vorherigen Ansprüche, **dadurch gekennzeichnet, dass** der Sulfatgehalt der Zusammensetzung 0,05 bis 3,5 Gew.-%, bevorzugt von 0,2 bis 3,0 Gew.-%, besonders bevorzugt von 0,5 bis 2,5 Gew.-%, beträgt.

10. Zusammensetzung nach mindestens einem der vorherigen Ansprüche, **dadurch gekennzeichnet, dass** das Verhältnis Cl/TiO₂ kleiner 0,0005, bevorzugt kleiner 0,0001, ist.

11. Zusammensetzung nach mindestens einem der vorherigen Ansprüche, **dadurch gekennzeichnet, dass** diese in Form einer Suspension oder Paste vorliegt.

12. Verfahren zur Herstellung einer Zusammensetzung nach mindestens einem der vorherigen Ansprüche 1 bis 11, umfassend das Mischen einer Titanverbindung, einer Eisenverbindung und einer Wolframverbindung, wobei die Titanverbindung mikrokristallines Titanoxidhydrat umfasst, das bevorzugt
in der TiO₂-Herstellung nach dem Sulfatverfahren bei der Hydrolyse einer titanylsulfathaltigen Lösung erhalten wird,
wobei die Titanverbindung eine mikrokristalline Anatasstruktur aufweist, und wobei unter mikrokristallin zu verstehen ist, dass die Auswertung der Reflexbreiten von Röntgenpulverdiffraktogrammen des mikrokristallinen Titanoxidhydrats (TiO(OH)₂) nach der Scherrer Gleichung eine mittlere Ausdehnung der Kristallite von 4-10 nm zeigt.

13. Verfahren nach Anspruch 12, **dadurch gekennzeichnet, dass** die Titanverbindung mikrokristallines Titanoxidhydrat ist, das bevorzugt in der TiO₂-Herstellung nach dem Sulfatverfahren bei der Hydrolyse einer titanylsulfathaltigen Lösung erhalten wird.

14. Verfahren nach Anspruch 12 oder 13, **dadurch gekennzeichnet, dass** eine wasserlösliche Eisenverbindung und/oder eine wasserlösliche Wolframverbindung auf der Titanverbindung abgeschieden wird.

15. Verfahren nach mindestens einem der Ansprüche 12 bis 14, **dadurch gekennzeichnet, dass** die Zusammensetzung vor der Verarbeitung zu Katalysatoren keiner thermischen Behandlung oberhalb von 300°C unterzogen worden ist und eine BET-Oberfläche der Zusammensetzung 100 bis 500 m²/g, bevorzugt 200 bis 400 m²/g, erhalten wird.

16. Verwendung einer Zusammensetzung nach mindestens einem der Ansprüche 1 bis 11 zur Herstellung eines Katalysators.

17. Katalysator oder Katalysatorrohstoff enthaltend eine Zusammensetzung nach einem oder mehreren der Ansprüche 1 bis 11.

18. Formstabiler, katalytisch aktiver Festkörper, erhältlich durch
(i) Mischen der Zusammensetzung nach einem oder mehreren der Ansprüche 1 bis 11 mit Bindemitteln, Weichmachern und ggf. weiteren Additiven, Formgebung der so erhaltenen Zusammensetzung, bevorzugt durch Extrudieren, und anschließender Kalzinierung
oder
(ii) Aufbringen der Zusammensetzung nach einem oder mehreren der Ansprüche 1 bis 11 ggf. zusammen mit Bindemitteln, Weichmachern und/oder weiteren Additiven, auf ein Trägermaterial und anschließende Kalzinierung.

## Claims

1. A composition comprising a titanium compound, an iron compound and a tungsten compound, wherein the titanium compound comprises microcrystalline titanium oxide hydrate, which is preferably obtained in TiO₂ production by the sulphate process by hydrolysis of a titanyl sulphate-containing solution,
wherein the titanium compound has a microcrystalline anatase structure, and wherein the composition has a vanadium content, calculated as V, of less than 0.15% by weight, preferably less than 0.05% by weight, more preferably less than 0.03% by weight, particularly preferably less than 0.01% by weight, based on the solids content of the composition, wherein microcrystalline means that the evaluation of the reflex widths of X-ray powder diffractograms of the microcrystalline titanium oxide hydrate (TiO(OH)₂) according to the Scherrer equation shows an average extension of the crystallites of 4-10 nm.

2. Composition according to claim 1, **characterized in that** the titanium compound is microcrystalline titanium oxide hydrate, which is preferably obtained in the TiO₂ production by the sulphate process upon hydrolysis of a titanyl sulphate-containing solution.

3. Composition according to claim 1 or 2, **characterized in that** the titanium compound forms more than 50% by weight, preferably more than 70% by weight, more preferably more than 90% by weight, of all titanium-containing components of the composition.

4. Composition according to at least one of the preceding claims, **characterized in that** the composition has a BET surface area greater than 150 m²/g, preferably greater than 200 m²/g, more preferably greater than 250 m²/g.

5. Composition according to at least one of the preceding claims, **characterized in that** the iron compound is an organic iron compound, preferably ammonium ferric (III) citrate, and/or **in that** the iron content, calculated as Fe₂O₃, is from 0.1 to 5% by weight, preferably from 0.2 to 3.5% by weight, based on the solids content of the composition.

6. Composition according to at least one of the preceding claims, **characterized in that** the tungsten content, calculated as WO₃, is from 2 to 30% by weight, preferably from 5 to 25% by weight, preferably from 5 to 15% by weight relative to the solids content of the composition.

7. Composition according to at least one of the preceding claims, **characterized in that** the composition contains a cerium compound and has a cerium content, calculated as CeO₂, of 0.01 to 5% by weight, preferably of 0.1 to 3.5% by weight, even more preferably of 0.1 to 2.5% by weight, particularly preferably of 0.5 to 2.5% by weight, based on the solids content of the composition.

8. Composition according to at least one of the preceding claims, **characterized in that** the composition has a Zr content, calculated as ZrO₂, of less than 8% by weight, preferably less than 5% by weight, particularly preferably less than 1% by weight, based on the solids content of the composition.

9. Composition according to at least one of the preceding claims, **characterized in that** the sulphate content of the composition is from 0.05 to 3.5% by weight, preferably from 0.2 to 3.0% by weight, more preferably from 0.5 to 2.5% by weight.

10. Composition according to at least one of the preceding claims, **characterized in that** the Cl/TiO₂ ratio is less than 0.0005, preferably less than 0.0001.

11. Composition according to at least one of the preceding claims, **characterized in that** it is present in the form of a suspension or paste.

12. A process for preparing a composition according to at least one of the preceding claims 1 to 11, comprising mixing a titanium compound, an iron compound and a tungsten compound, wherein the titanium compound comprises microcrystalline titanium oxide hydrate, which is preferably obtained in the TiO₂ production by the sulphate process by the hydrolysis of a solution containing titanyl sulphate, wherein the titanium compound has a microcrystalline anatase structure, and where microcrystalline means that the evaluation of the reflex widths of X-ray powder diffractograms of the microcrystalline titanium oxide hydrate (TiO(OH)₂) according to the Scherrer equation shows an average extension of the crystallites of 4-10 nm.

13. The process according to claim 12, **characterized in that** the titanium compound is microcrystalline titanium oxide hydrate, preferably obtained in the TiO₂ production by the sulphate process upon hydrolysis of a titanyl sulphate-containing solution.

14. The method according to claim 12 or 13, **characterized in that** a water-soluble iron compound and/or a water-soluble tungsten compound is deposited on the titanium compound.

15. Process according to at least one of claims 12 to 14, **characterized in that** the composition has not been subjected to a thermal treatment above 300°C prior to processing into catalysts and a BET surface area of the composition 100 to 500 m²/g, preferably 200 to 400 m²/g, is obtained.

16. Use of a composition according to at least one of claims 1 to 11 for the preparation of a catalyst.

17. A catalyst or catalyst raw material comprising a composition according to one or more of claims 1 to 11.

18. Shape-stable, catalytically active solid, obtainable by
(i) mixing the composition according to one or more of claims 1 to 11 with binders, plasticisers and optionally further additives, shaping the composition thus obtained, preferably by extrusion, and subsequent calcination,
or
(ii) applying the composition according to one or more of claims 1 to 11, optionally together with binders, plasticisers and/or further additives, to a carrier material and subsequent calcination.

## Revendications

1. Composition, comprenant un composé de titane, un composé de fer et un composé de tungstène, le composé de titane comprenant un oxyde de titane hydraté microcristallin, que l'on obtient de préférence lors de la préparation de TiO₂ d'après le procédé au sulfate lors de l'hydrolyse d'une solution contenant le sulfate de titanyle, le composé de titane présentant une structure anatase microcristalline, et la composition présentant une teneur en vanadium, calculée en tant que V de moins de 0,15 % en poids, de préférence de moins de 0,05 % en poids, de manière encore plus préférentielle, de moins de 0,03 % en poids, de manière particulièrement préférentielle, de moins de 0,01 % en poids, rapportés à la teneur en matière solide de la composition,
le terme microcristallin signifiant que l'évaluation des largeurs de réflexion de diagrammes de diffraction des rayons X sur poudre de l'oxyde de titane hydraté (TiO(OH)₂) microcristallin selon l'équation de Scherrer montre une extension moyenne des cristallites de 4 à 10 nm.

2. Composition selon la revendication 1, **caractérisée en ce que** le composé de titane est de l'oxyde de titane hydraté microcristallin, que l'on obtient de préférence lors de la préparation de TiO₂, d'après le procédé au sulfate, lors de l'hydrolyse d'une solution contenant le sulfate de titanyle.

3. Composition selon la revendication 1 ou 2, **caractérisée en ce que** le composé de titane constitue plus de 50 % en poids, de préférence plus de 70 % en poids, de manière particulièrement préférentielle, plus de 90 % en poids de tous les composants contenant du titane de la composition.

4. Composition selon au moins l'une quelconque des revendications précédentes, **caractérisée en ce que** la composition présente une surface BET supérieure à 150 m²/g, de préférence supérieure à 200 m²/g, de manière particulièrement préférentielle, supérieure à 250 m²/g.

5. Composition selon au moins l'une quelconque des revendications précédentes, **caractérisée en ce que** le composé de fer est un composé de fer organique, de préférence un citrate de fer III et d'ammonium, et/ou **en ce que** la teneur en fer, calculée en tant que Fe₂O₃ s'élève à de de 0,1 à 5 % en poids, de préférence à de 0,2 à 3,5 % en poids, rapportés à la teneur en matière solide de la composition.

6. Composition selon au moins l'une quelconque des revendications précédentes, **caractérisée en ce que** la teneur en tungstène, calculée en tant que WO₃, s'élève à de 2 à 30 % en poids, de préférence à de 5 à 25 % en poids, de préférence à de 5 à 15 % en poids, rapportés à la teneur en matière solide de la composition.

7. Composition selon au moins l'une quelconque des revendications précédentes, **caractérisée en ce que** la composition contient un composé de cérium et présente une teneur en cérium, calculée en tant que CeO₂ de 0,01 à 5 % en poids, de préférence de 0,1 à 3,5 % en poids, de manière encore plus préférentielle, de 0,1 à 2,5 % en poids, de manière particulièrement préférentielle, de 0,5 à 2,5 % en poids, rapportés à la teneur en matière solide de la composition.

8. Composition selon au moins l'une quelconque des revendications précédentes, **caractérisée en ce que** la composition présente une teneur en Zr, calculée en tant que ZrO₂ de moins de 8 % en poids, de préférence de moins de 5 % en poids, de manière particulièrement préférentielle, de moins de 1 % en poids, rapportés à la teneur en matière solide de la composition.

9. Composition selon au moins l'une quelconque des revendications précédentes, **caractérisée en ce que** la teneur en sulfate de la composition s'élève à de 0,05 à 3,5 % en poids, de préférence à de 0,2 à 3,0 % en poids, de manière particulièrement préférentielle, à de 0,5 à 2,5 % en poids.

10. Composition selon au moins l'une quelconque des revendications précédentes, **caractérisée en ce que** le rapport Cl/TiO₂ est inférieur à 0,0005, de préférence inférieur à 0,0001.

11. Composition selon au moins l'une quelconque des revendications précédentes, **caractérisée en ce qu'**elle se présente sous la forme d'une suspension ou d'une pâte.

12. Procédé, destiné à préparer une composition selon au moins l'une quelconque des revendications précédentes 1 à 11, comprenant le mélange d'un composé de titane, d'un composé de fer et d'un composé de tungstène, le composé de titane comprenant de l'oxyde de titane hydraté microcristallin, que l'on obtient de préférence
lors de la préparation de TiO₂, d'après le procédé au sulfate, lors de l'hydrolyse d'une solution contenant le sulfate de titanyle,
le composé de titane présentant une structure anatase microcristalline, et le terme microcristallin signifiant que l'évaluation des largeurs de réflexion de diagrammes de diffraction des rayons X sur poudre de l'oxyde de titane hydraté (TiO(OH)₂) microcristallin selon l'équation de Scherrer montre une extension moyenne des cristallites de 4 à 10 nm.

13. Procédé selon la revendication 12, **caractérisé en ce que** le composé de titane est de l'oxyde de titane hydraté microcristallin, que l'on obtient de préférence lors de la préparation de TiO₂, d'après le procédé au sulfate, lors de l'hydrolyse d'une solution contenant le sulfate de titanyle.

14. Procédé selon la revendication 12 ou 13, **caractérisé en ce que** l'on dépose un composé de fer hydrosoluble et/ou un composé de tungstène hydrosoluble sur le composé de titane.

15. Procédé selon au moins l'une quelconque des revendications 12 à 14, **caractérisé en ce qu'**avant la transformation en catalyseurs, la composition n'a été soumise à aucun traitement thermique à des températures supérieures à 300 °C et **en ce que** l'on obtient une surface BET de la composition de 100 à 500 m²/g, de préférence de 200 à 400 m²/g.

16. Utilisation d'une composition selon au moins l'une quelconque des revendications 1 à 11 pour la préparation d'un catalyseur.

17. Catalyseur ou matière première pour catalyseur contenant une composition selon l'une quelconque ou plusieurs des revendications 1 à 11.

18. Corps solide indéformable, activé par catalyseur, susceptible d'être obtenu par
(I) mélange de la composition selon l'une quelconque ou plusieurs des revendications 1 à 11 avec des agents liants, des plastifiants et le cas échéant, d'autres additifs, façonnage de la composition ainsi obtenue, de préférence par extrusion et calcination ultérieure,
ou
(II) application de la composition selon l'une quelconque ou plusieurs des revendications 1 à 11, le cas échéant conjointement avec un agent liant, un plastifiant et/ou d'autres additifs sur une matière de support et calcination ultérieure.
